# EUROPÄISCHE PATENTSCHRIFT

(11) **EP 1 900 971 B1**
(45) Veröffentlichungstag und Bekanntmachung des Hinweises auf die Patenterteilung: **04.11.2009**
(21) Anmeldenummer: 07115497.5
(22) Anmeldetag: 03.09.2007
(51) Int. Cl.: F16H 47/02

(54) **Hydrostatisch-mechanisches Getriebe**
Hydrostatic/mechanical transmission
Engrenage hydrostatique-mécanique

(30) Priorität: 14.09.2006 DE 102006043289
(43) Veröffentlichungstag der Anmeldung: 19.03.2008
(73) Patentinhaber: ZF Friedrichshafen AG, 88038 Friedrichshafen (DE)
(72) Erfinder: Legner, Jürgen, 88048 Friedrichshafen (DE); Baumann, Klaus, 88239 Wangen (DE); Häffner, Martin, 88046 Friedrichshafen (DE)

(56) Entgegenhaltungen:
- EP-A- 0 483 543
- EP-A- 1 148 275
- WO-A-99/17021
- WO-A-2005/111466
- WO-A-2005/111475
- US-A- 3 902 567
- US-A- 5 078 659
- US-B1- 6 321 867
- US-B1- 6 354 975
- US-B1- 6 953 327

## Beschreibung

Die Erfindung bezieht sich auf ein hydrostatisch-mechanisches Getriebe nach der im Oberbegriff von Anspruch 1 näher definierten Art.

Die DE 10 2004 023 631 A1 offenbart ein hydrostatisch-mechanisches Getriebe mit einem Radialkolbenmotor mit einer Kurbelwelle, wobei die Kurbelwelle ein Stirnrad antreibt, welches mit einem weiteren Stirnrad in Wirkverbindung ist und den Abtrieb antreibt.

Gattungsgemäße Getriebe werden beispielsweise in Arbeitsmaschinen, wie Radlader, verwendet.

Der vorliegenden Erfindung liegt die Aufgabe zugrunde, ein hydrostatisch-mechanisches Getriebe zu schaffen, welches kompakt aufgebaut und betriebssicher ausgeführt ist.

Erfindungsgemäß, weist das hydrostatisch-mechanische Getriebe mindestens einen Radialkolbenmotor auf, welcher eine Kurbelwelle aufweist, welche ein Stirnrad antreibt. Das Getriebegehäuse besteht aus drei Getriebegehäuseteilen, welche mindestens zwei Räume bilden, wobei in einem ersten Raum, welcher von einem ersten und einem zweiten Gehäuseteil gebildet wird, das Stirnradgetriebe angeordnet ist, und in einem zweiten Raum, welcher durch das zweite und das dritte Getriebegehäuseteil gebildet wird, der Radialkolbenmotor angeordnet ist. Insbesondere sind die Zylinder des Radialkolbenmotors im zweiten und dritten Gehäuseteil gelagert. Dadurch ist es möglich, an das dritte Gehäuseteil ein Ventilgehäuse anzubringen, in welchem die Ventile sowie die Druckmittelzuführungen für den Radialkolbenmotor vorhanden sind. Dadurch, dass das zweite Gehäuseteil den ersten Raum vom zweiten Raum trennt, besteht die Möglichkeit, den ersten Raum druckflüssigkeitsdicht zum zweiten Raum abzudichten, wodurch beispielsweise das Stirnradgetriebe mit einem anderen Schmiermittel versorgt werden kann als der Radialkolbenmotor.

Des weiteren besteht die Möglichkeit, die Leckage des Radialkolbenmotors in den zweiten Raum abzuführen, welcher beispielsweise über Leitungen mit einem Kühler verbunden sein kann und das Leckageöl über den Kühler in ein Druckmittelreservoir leitet.

In einer weiteren Ausgestaltungsform ist im Ventilgehäuse ein Spülventil angeordnet, welches heißes Druckmittel des Radialkolbenmotors in den zweiten Raum leitet, über welchen, nach Vermischung mit der Leckage, das Druckmittel und das Leckageöl über den Kühler abgeführt werden. Durch diese Anordnung ist es möglich, ein sehr kompaktes hydrostatisch-mechanisches Getriebe zu schaffen, welches mit unterschiedlichen Schmiermitteln betrieben werden kann und bei welchem auf einfache Weise der Radialkolbenmotor vor Überhitzung geschützt ist.

Die Kurbelwelle ist über drei Lagerstellen gelagert, wodurch die Kurbelwelle so dimensioniert werden kann, dass bei der maximal zulässigen Durchbiegung der zur Verfügung stehende Bauraum eingehalten werden kann. Vorzugsweise ist eine Lagerstelle zwischen dem Stirnrad und dem exzentrischen Teil der Kurbelwelle und die beiden anderen Lagerstellen jeweils im Bereich der Enden der Kurbelwelle angeordnet.

In einer weiteren Ausgestaltungsform der Erfindung ist das Stirnrad schrägverzahnt ausgeführt und die beiden benachbart zum exzentrischen Teil der Kurbelwelle angeordneten Lager sind als Kegelrollenlager ausgeführt, wodurch das Kegelrollenlager, welches im Bereich der Druckmittelzuführung zu den Zylindern angeordnet ist, eine Axialkraftkomponente erzeugt, welche der hydraulischen Kraft im Bereich des Druckmittelverteilers entgegenwirkt, wodurch die Verformung des Gehäuseteils, in welchem die Druckmittelzuführungen angeordnet sind, reduziert werden. Indem das Stirnrad beidseitige Lagerstellen aufweist, wird die Radialkraft, welche durch das Zusammenwirken der Stirnräder erzeugt wird, direkt in das Getriebegehäuse eingeleitet, wodurch die Durchbiegung der Kurbelwelle zusätzlich verringert wird. Da der Druckmittelverteiler über eine Verbindungswelle mit der Kurbelwelle verbunden ist, wird durch die Reduzierung der Durchbiegung der Kurbelwelle auch die Radialbewegung des Druckmittelverteilers reduziert.

In einer weiteren Ausgestaltungsform der Erfindung besteht das Getriebegehäuse aus drei Getriebegehäuseteilen mit Lagerstellen:
- einem ersten Gehäuseteil, in welchem die Stirnräder sowie die erste Lagerstelle im Bereich des Stirnrads angeordnet ist,
- einem zweiten Gehäuseteil, welches die mittlere Lagerstelle zwischen dem Stirnrad und dem exzentrischen Teil der Kurbelwelle bildet und
- einem dritten Gehäuseteil, welches die dritte Lagerstelle aufnimmt und die Druckmittelzuführungen beinhaltet.

An das dritte Gehäuseteil schließt ein Ventilgehäuse an, welches die Druckmittelverteilung sowie die Druckmittelanschlüsse und weitere Ventile beinhaltet, wodurch dieser Aufbau ermöglicht, dass das erste und zweite Gehäuseteil einen Schmiermittelraum schaffen, in welchem die Stirnräder angeordnet sind, das zweite und dritte Gehäuseteil einen Schmiermittelraum schaffen, in welchem die Hauptbauteile des Radialkolbenmotors angeordnet sind und das Ventilgehäuse die Ventilbauteile aufnimmt.

Vorzugsweise sind der Schmiermittelraum, in welchem sich die Stirnräder befinden, und der Schmiermittelraum, in welchem sich der Radialkolbenmotor befindet, flüssigkeitsdicht gegeneinander abgedichtet.

In einer weiteren Ausgestaltungsform treibt das mit der Kurbelwelle in Wirkverbindung stehende Stirnrad ein weiteres Stirnrad an, welches den Abtrieb antreibt, welcher entweder zwei Abtriebsflansche, jeweils an den Enden der Abtriebswelle, oder einen Abtriebsflansch und ein Kegelritzel aufweist, um das hydrostatisch-mechanische Getriebe entweder zwischen der Vorderachse und der Hinterachse des Fahrzeugs einzubauen, um die Vorderachse und die Hinterachse anzutreiben oder direkt an die Hinterachse einzubauen, um die Vorderachse und die Hinterachse anzutreiben oder direkt an die Hinterachse einzubauen, um über den verbleibenden Abtriebsflansch die andere Achse über eine Kardanwelle anzutreiben.

Weitere Merkmale sind der Figuren-Beschreibung zu entnehmen.
Es zeigen:
- Fig. 1: einen Schnitt durch das hydrostatisch-mechanische Getriebe mit einem Radialkolbenmotor;

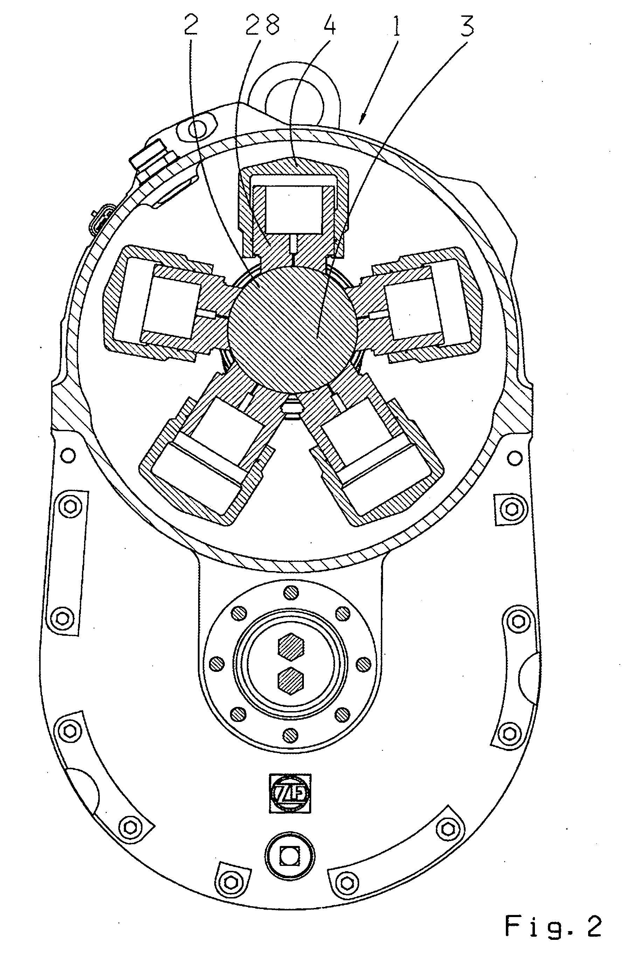

- Fig. 2: einen Schnitt durch den Radialkolbenmotor des hydrostatisch-mechanischen Getriebes nach Fig. 1;
- Fig. 3: einen Schnitt durch ein hydrostatisch-mechanisches Getriebe mit zwei Radialkolbenmotoren;

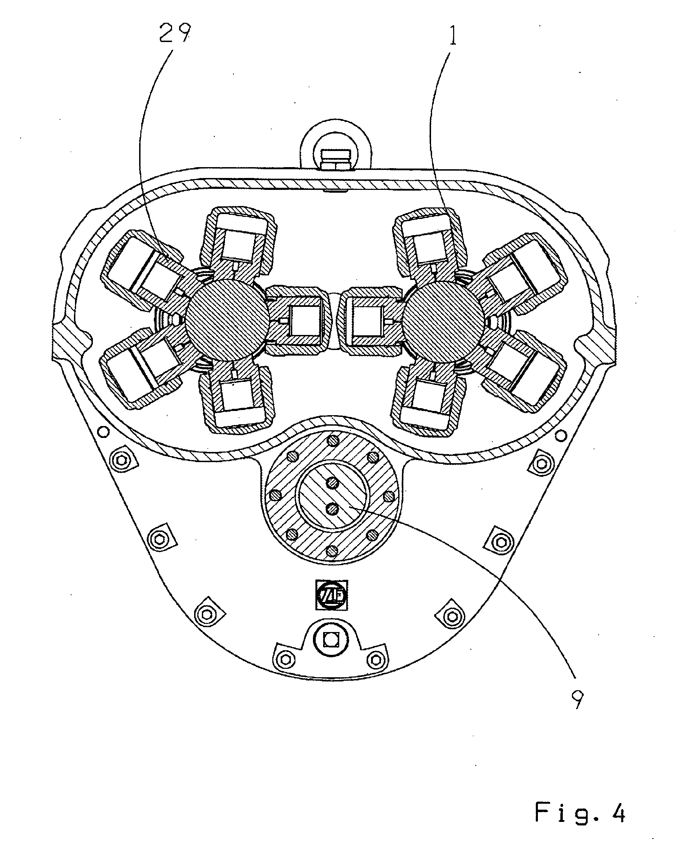

- Fig. 4: einen Schnitt durch die Radialkolbenmotoren des hydrostatisch-mechanischen Getriebes nach Fig. 3;

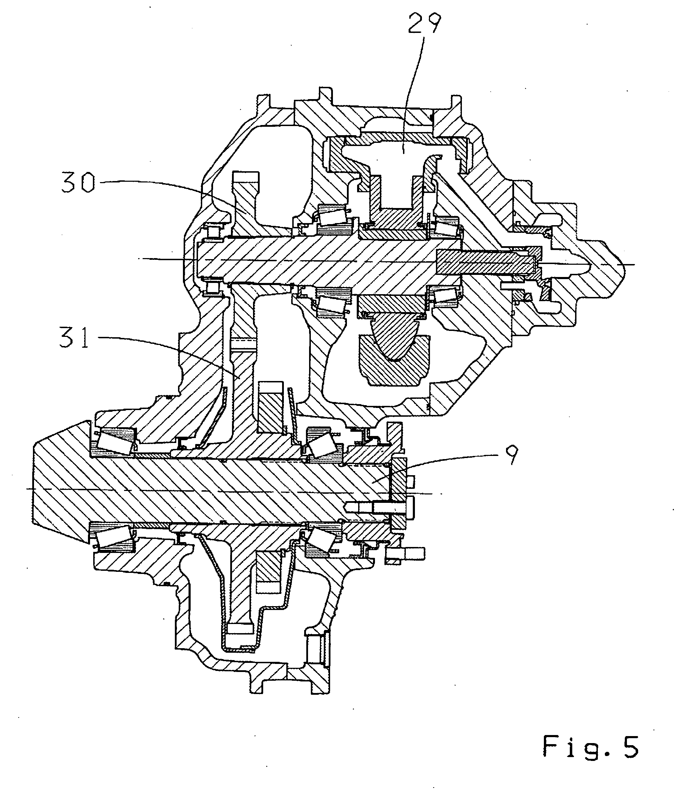

- Fig. 5: einen Schnitt durch den anderen Radialkolbenmotor des hydrostatisch-mechanischen Getriebes nach Fig. 3;

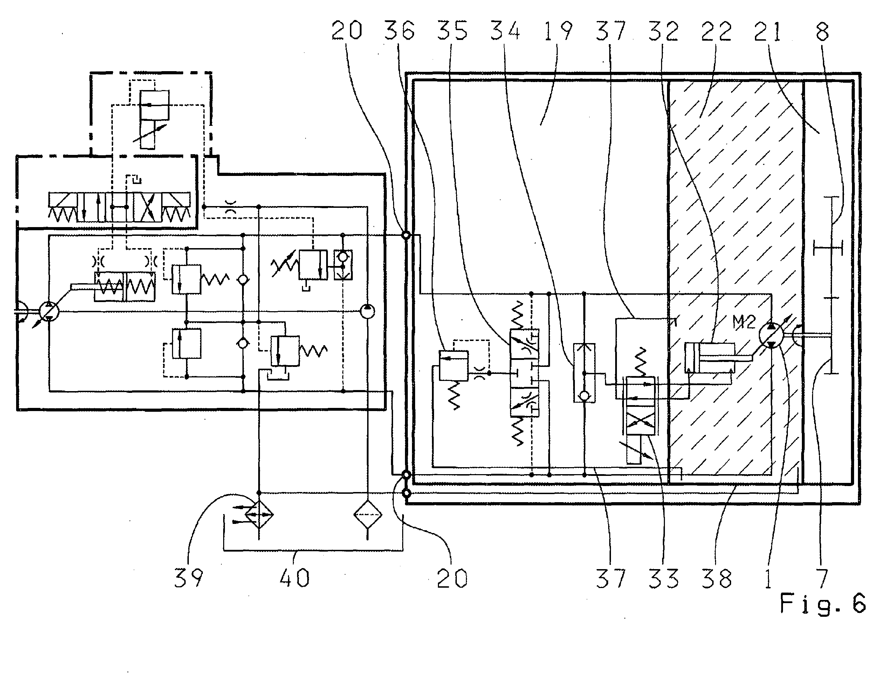

- Fig. 6: ein Hydraulikschema des hydrostatisch-mechanischen Getriebes nach Fig. 1 und

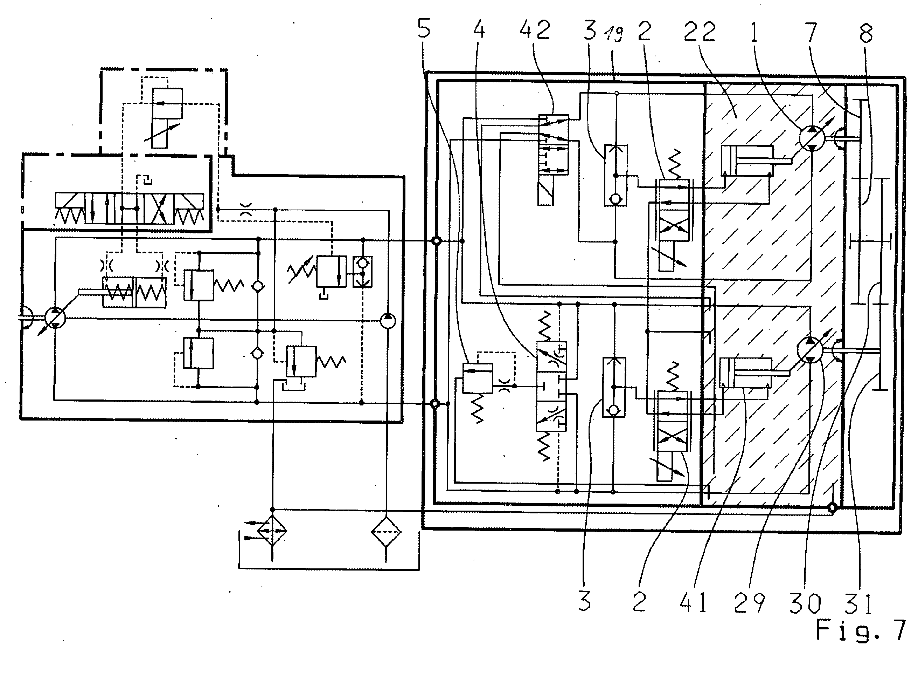

- Fig. 7: ein Hydraulikschema des hydrostatisch-mechanischen Getriebes nach Fig. 3.

### Fig. 1:

Ein hydraulischer Radialkolbenmotor 1 mit einer Kurbelwelle 2 mit einem exzentrischen Abschnitt 3 weist einen Zylinder 4 auf, welcher einerseits in dem dritten Gehäuseteil 5 und dem zweiten Gehäuseteil 6 gelagert ist. Die Kurbelwelle 2 ist mit einem ersten Stirnrad 7 drehfest verbunden. Das erste Stirnrad 7 steht in Wirkverbindung mit einem zweiten Stirnrad 8, welches eine Abtriebswelle 9 antreibt Weist die Abtriebswelle 9 ein Ritzel 10 und einen Abtriebsflansch 11 auf, so besteht die Möglichkeit, das hydrostatisch-mechanische Getriebe direkt an eine Antriebsachse anzubauen, und es besteht aber auch die Möglichkeit, die Abtriebswelle 9 auf jeder Seite mit einem Abtriebsflansch 11 auzurüsten, um das hydrostatisch-mechanische Getriebe zwischen den Antriebsachsen anzuordnen.

Vorzugsweise sind das erste Stirnrad 7 und das zweite Stirnrad 8 schrägverzahnt ausgeführt. Die Kurbelwelle 2 ist über eine erste Lagerung 12, eine zweite Lagerung 13 und eine dritte Lagerung 14 gelagert. Die erste Lagerung 12 ist in dem ersten Gehäuseteil 15 angeordnet und bildet die erste Lagerstelle. Die zweite Lagerung 13 ist zwischen dem Stirnrad 7 und dem exzentrischen Abschnitt 3 im zweiten Gehäuseteil 6 angeordnet und bildet die zweite Lagerstelle. Das zweite Gehäuseteil 6 weist hierfür eine Gehäusewand 16 auf. Die dritte Lagerung 14 ist in dem dritten Gehäuseteil 5 angeordnet und bildet die dritte Lagerstelle. Die Kurbelwelle 2 treibt über eine Verbindungswelle 17, welche auch einstückig mit der Kurbelwelle 2 ausgebildet sein kann, einen Druckmittelverteiler 18 an. Durch die spezielle Lagerung der Kurbelwelle wird die Durchbiegung der Kurbelwelle 2 verringert, wodurch sich auch die Funktion des Druckmittelverteilers 18 verbessert. Der Druckmittelverteiler 18 ist in einem Ventilgehäuse 19 angeordnet, in welchem zusätzlich die benötigten Ventile und die Hauptanschlüsse für die Druckmittelversorgung 20 angeordnet sind. Das erste Gehäuseteil 15 bildet mit dem zweiten Gehäuseteil 6 einen Schmiermittelraum 21, welcher gegenüber dem Raum 22 über eine Dichtung 23 druckflüssigkeitsdicht abgedichtet ist. Somit besteht die Möglichkeit, unterschiedliche Schmiermittel für den Raum 21 und den Raum 22 zu verwenden. Die Ventile im Ventilgehäuse 19 sowie die Leckage des Radialkolbenmotors 1 fließen in den Raum 22 und werden von dort über eine nicht gezeigte Leitung über einen Kühler in ein externes Schmierflüssigkeitsreservoir geleitet. Der Zylinder 4 weist Lagerzapfen 24 auf, über welche der Zylinder 4 drehbar gelagert ist und welche mit einem nicht gezeigten Drehwinkelsensor in Wirkverbindung stehen, wodurch das Schluckvolumen des hydraulischen Motors ermittelt werden kann. Dieses Signal dient als Regelgröße, um das Schluckvolumen des Hydromotors entsprechend einzuregeln. Das zweite Stirnrad 8 ist durch eine Abschirmung 25 abgeschirmt, um die Panschverluste bei drehendem zweitem Stirnrad 8 zu verringern. Die Abschirmung 25 ist vorzugsweise zweiteilig ausgeführt, und es besteht die Möglichkeit, die beiden Bauteile aus einem Kunststoff, beispielsweise einem Polyamid, herzustellen. Die Abschirmung 25 weist mindestens eine Erhebung 26 auf, welche in eine Ausnehmung 27 eingreift, um die Position der Abschirmung 25 zu fixieren. Die beiden einzelnen Teile der Abschirmung 25 sind in axialer Richtung zusammengesteckt und liegen an dem ersten Gehäuseteil 15 und dem zweiten Gehäuseteil 6 in axialer Richtung an, wodurch die Abschirmung 25 geschlossen bleibt. Die Lagerzapfen 24 weisen nicht gezeigte, in axialer Richtung verlaufende Flächen auf, welche verhindern, dass zwischen der Sacklochbohrung im zweiten Gehäuseteil 6 oder im dritten Gehäuseteil 5 und dem Lagerzapfen 24 hydraulischer Druck aufgebaut wird, welcher das zweite Gehäuseteil 6 und das dritte Gehäuseteil 5 auseinanderdrückt.

### Fig. 2:

Der Radialkolbenmotor 1 weist eine Kurbelwelle 2 auf, deren exzentrischer Abschnitt 3 Kolben 28 in den Zylindern 4 bewegt.

### Fig. 3:

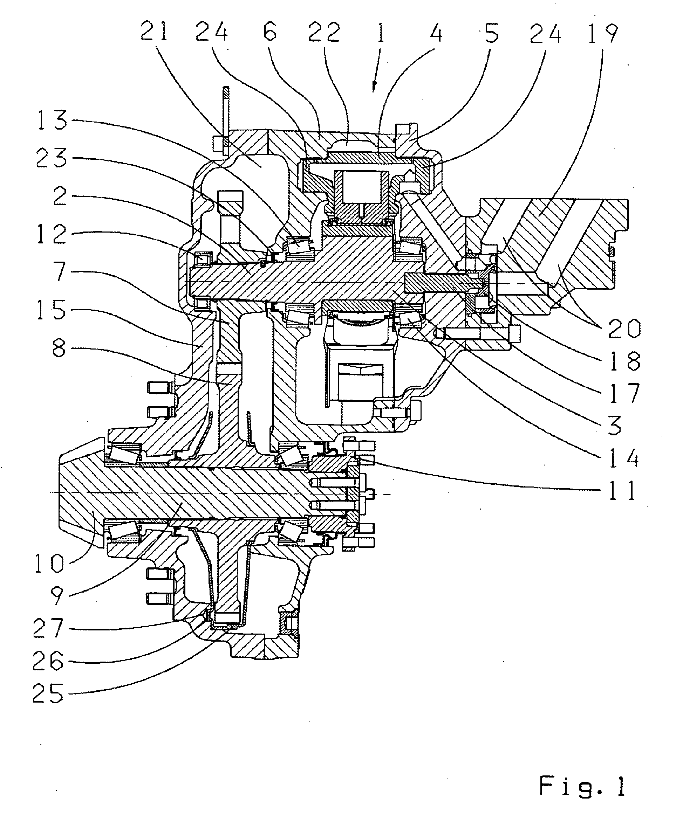

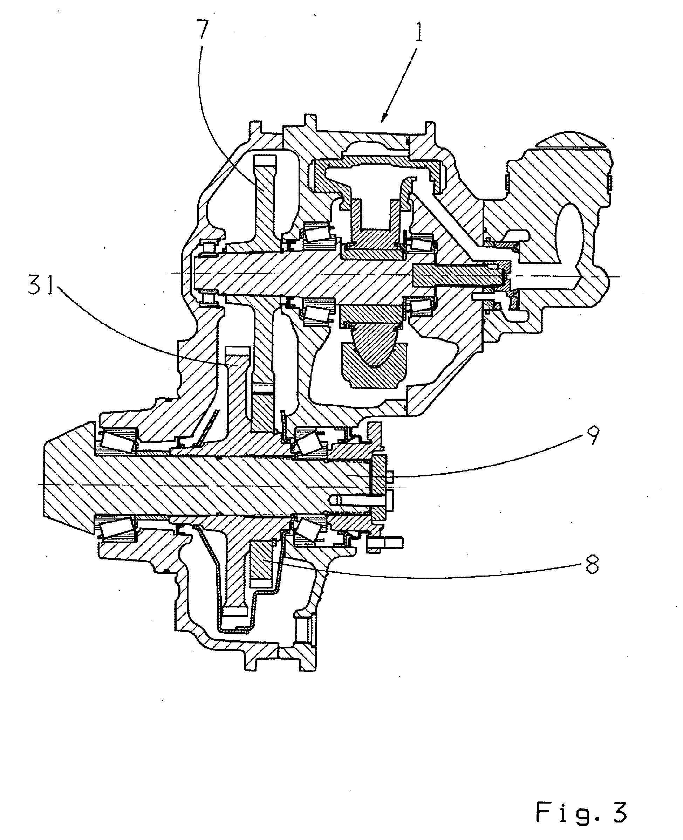

Das hydrostatisch-mechanische Getriebe nach Fig. 3 unterscheidet sich vom hydrostatisch-mechanischen Getriebe nach Fig. 1 dadurch, dass zwei Radialkolbenmotore vorhanden sind, wobei jeder Radialkolbenmotor ein Stirnrad antreibt, welches mit auf einer Abtriebswelle 9 angeordneten Stirnrädern in Wirkverbindung steht. Der erste Radialkolbenmotor 1 treibt das erste Stirnrad 7 an, welches mit dem zweiten Stirnrad 8 in Wirkverbindung steht und die Abtriebswelle 9 antreibt. Der zweite, nicht gezeigte Radialkolbenmotor 29 treibt ein nicht gezeigtes drittes Stirnrad 30 an, welches mit dem vierten Stirnrad 31 in Wirkverbindung steht, welches die Abtriebswelle 9 antreibt.

### Fig. 4:

Der erste Radialkolbenmotor 1 und der zweite Radialkolbenmotor 29 sind in Wirkverbindung mit der Abtriebswelle 9.

### Fig. 5:

Der zweite Radialkolbenmotor 29 treibt über das dritte Stirnrad 30 das vierte Stirnrad 31 und dadurch die Abtriebswelle 9 an.

### Fig. 6:

Im Raum 21 sind das erste Stirnrad 7 und das zweite Stirnrad 8 angeordnet. Im Raum 22 sind der Radialkolbenmotor 1 sowie dessen Hubraum-Verstelleinrichtung 32 angeordnet. Im Ventilgehäuse 19 sind das 4/2-Proportionalventil 33 zur Verstellung des Hubvolumens, das Wechselventil 34 und das Spülventil 35 mit dem dazugehörigen Druckbegrenzungsventil 36 angeordnet. Ebeno weist das Ventilgehäuse 19 die Anschlüsse 20 für die Hauptdruckmittelversorgung auf. Die Entlüftung der Ventile im Ventilgehäuse 19 wird über die Leitungen 37 in den Raum 22 geleitet und von dort über die Leitung 38 und den Kühler 39 in ein Druckmittelreservoir 40. Somit wird der Radialkolbenmotor 1 ausreichend gekühlt und der hydrostatisch-mechanische Antrieb weist nur eine geringe Anzahl von Anschlüssen auf.

### Fig. 7:

Der erste Radialkolbenmotor 1 mit seiner Hubraum-Verstelleinrichtung 32 und der zweite Radialkolbenmotor 29 mit seiner Hubraum-Verstelleinrichtung 41 befinden sich im Raum 22 und die Stirnräder 7, 8, 30 und 31 befinden sich Raum 21. Das Ventilgehäuse 19 weist zusätzlich ein Abschaltventil 42 auf, mittels welchem der erste Radialkolbenmotor 1 vollständig mit dem Raum 22 verbunden werden kann, wodurch der Radialkolbenmotor 1, wenn er auf sein Hubvolumen Null verstellt ist, bei sehr hoher Drehzahl betrieben werden kann, da er einerseits vollständig von der Hochdruckzuführung getrennt ist und durch die Verbindung mit dem Raum 22 Wärmeverluste abführen kann. Dadurch ist es nicht mehr notwendig, eine Abschaltkupplung zwischen dem ersten Radialkolbenmotor 1 und dem ersten Stirnrad 7 anzuordnen.

### Bezugszeichen

- 1: Radialkolbenmotor
- 2: Kurbelwelle
- 3: exzentrischer Abschnitt
- 4: Zylinder
- 5: drittes Gehäuseteil
- 6: zweites Gehäuseteil
- 7: erstes Stirnrad
- 8: zweites Stirnrad
- 9: Abtriebswelle
- 10: Ritzel
- 11: Abtriebsflansch
- 12: erste Lagerung
- 13: zweite Lagerung
- 14: dritte Lagerung
- 15: erstes Gehäuseteil
- 16: Gehäusewand
- 17: Verbindungswelle
- 18: Druckmittelverteiler
- 19: Ventilgehäuse
- 20: Anschlüsse
- 21: Raum
- 22: Raum
- 23: Dichtung
- 24: Lagerzapfen
- 25: Abschirmung
- 26: Erhebung
- 27: Ausnehmung
- 28: Kolben
- 29: zweiter Radialkolbenmotor
- 30: drittes Stirnrad
- 31: viertes Stirnrad
- 32: Hubraum-Verstelleinrichtung
- 33: 4/2-Proportionalventil
- 34: Wechselventil
- 35: Spülventil
- 36: Druckbegrenzungsventil
- 37: Leitung
- 38: Leitung
- 39: Kühler
- 40: Druckmittelreservoir
- 41: Hubraum-Verstelleinrichtung
- 42: Abschaltventil

## Patentansprüche

1. Hydrostatisch-mechanisches Getriebe mit einem Radialkolbenmotor (1) mit einer Kurbelwelle (2) mit einem exzentrischen Abschnitt (3) und Zylindern (4) mit Lagerzapfen (24), welcher über mindestens ein Stirnradgetriebe (7, 8) einen Abtrieb antreibt, wobei das Stirnradgetriebe (7, 8) und der Radialkolbenmotor (7) in einem Getriebegehäuse angeordnet sind, **dadurch gekennzeichnet, dass** das Getriebegehäuse aus mindestens drei Gehäuseteilen (5, 6, 15) besteht, die jeweils eine Lagerstelle für die Kurbelwelle bilden, wobei ein erstes Gehäuseteil (15) und ein zweites Gehäuseteil (6) einen ersten Raum (21) bilden, in welchem das Stirnradgetriebe (7, 8) angeordnet ist, und die Zylinder (4) über die Lagerzapfen (24) in dem zweiten Gehäuseteil (6) und einem dritten Gehäuseteil (5) gelagert sind, wobei das zweite Gehäuseteil (6) und das dritte Gehäuseteil (5) einen zweiten Raum (22) bilden, in welchem der Radialkolbenmotor (1) angeordnet ist, und sich das zweite Gehäuseteil (6) benachbart zum Stirnradgetriebe (7, 8) und zum Radialkolbenmotor (1) befindet und das dritte Gehäuseteil (5) mit Druckmittelzuführungen (20) für den Radialkolbenmotor (1) in Verbindung steht.

2. Hydrostatisch-mechanisches Getriebe nach Anspruch 1, **dadurch gekennzeichnet, dass** das dritte Gehäuseteil (5) mit einem Ventilgehäuse (19) verbunden ist, über welches der Radialkolbenmotor (1) mit Druckmittel versorgt wird.

3. Hydrostatisch-mechanisches Getriebe nach Anspruch 1, **dadurch gekennzeichnet, dass** die Leckage des Radialkolbenmotors (1) in den vom zweiten Gehäuseteil (6) und dritten Gehäuseteil (5) gebildeten Raum (22) fließt, von welchem dieses über einen Kühler (39) in ein Druckmittelreservoir (40) fließt.

4. Hydrostatisch-mechanisches Getriebe nach Anspruch 2, **dadurch gekennzeichnet, dass** im Ventilgehäuse (19) ein Spülventil (35) angeordnet ist, über welches Druckmittel aus einer Druckmittelrückführung vom Radialkolbenmotor in den Raum (22), welchen die zweite Gehäusehälfte (6) und die dritte Gehäusehälfte (5) bilden, gelangt.

5. Hydrostatisch-mechanisches Getriebe nach Anspruch 1, **dadurch gekennzeichnet, dass** der Raum (21), welchen die erste Gehäusehälfte (15) und die zweite Gehäusehälfte (6) bilden, druckflüssigkeitsdicht gegen den Raum (22), welchen die zweite Gehäusehälfte (6) und die dritte Gehäusehälfte (5) bilden, abgedichtet ist.

## Claims

1. Hydrostatically mechanical gear with a radial-piston motor (1) having a crankshaft (2) with an eccentric portion (3) and having cylinders (4) with bearing journals (24), the said radial-piston motor driving an output via at least one spur gear (7, 8), the spur gear (7, 8) and the radial-piston motor (7) being arranged in a gear case, **characterized in that** the gear case consists of at least three case parts (5, 6, 15) which each form a bearing point for the crankshaft, a first case part (15) and a second case part (6) forming a first space (21) in which the spur gear (7, 8) is arranged, and the cylinders (4) being mounted by the bearing journals (24) in the second case part (6) and a third case part (5), the second case part (6) and the third case part (5) forming a second space (22) in which the radial-piston motor (1) is arranged, and the second case part (6) being located adjacent to the spur gear (7, 8) and to the radial-piston motor (1), and the third case part (5) being connected to pressure-medium feeds (20) for the radial-piston motor (1).

2. Hydrostatically mechanical gear according to Claim 1, **characterized in that** the third case part (5) is connected to a valve housing (19), via which the radial-piston motor (1) is supplied with pressure medium.

3. Hydrostatically mechanical gear according to Claim 1, **characterized in that** the leakage of the radial-piston motor (1) flows into the space (22) which is formed by the second case part (6) and the third case part (5) and from which this flows via a cooler (39) into a pressure-medium reservoir (40).

4. Hydrostatically mechanical gear according to Claim 2, **characterized in that** the valve housing (19) has arranged in it a scavenging valve (35), via which pressure medium passes out of a pressure-medium return from the radial-piston motor into the space (22) which the second case half (6) and the third case half (5) form.

5. Hydrostatically mechanical gear according to Claim 1, **characterized in that** the space (21) which the first case half (15) and the second case half (6) form is sealed off, tight to hydraulic fluid, with respect to the space (22) which the second case half (6) and the third case half (5) form.

## Revendications

1. Engrenage hydrostatique mécanique comprenant un moteur à piston radial (1) avec un vilebrequin (2) comprenant une portion excentrique (3) et des cylindres (4) avec des tourillons (24), qui entraîne une prise de force par le biais d'au moins un engrenage à pignons droits (7, 8), l'engrenage à pignons droits (7, 8) et le moteur à piston radial (7) étant disposés dans un carter d'engrenage, **caractérisé en ce que** le carter d'engrenage se compose d'au moins trois parties de carter (5, 6, 15) qui forment chacune un point de palier pour le vilebrequin, une première partie de carter (15) et une deuxième partie de carter (6) formant un premier espace (21), dans lequel l'engrenage à pignons droits (7, 8) est disposé, et les cylindres (4) étant montés par le biais des tourillons (24) dans la deuxième partie de carter (6) et une troisième partie de carter (5), la deuxième partie de carter (6) et la troisième partie de carter (5) formant un deuxième espace (22), dans lequel le moteur à piston radial (1) est disposé, et la deuxième partie de carter (6) se trouvant à côté de l'engrenage à pignons droits (7, 8) et du moteur à piston radial (1) et la troisième partie de carter (5) étant en liaison avec des alimentations en fluide sous pression (20) pour le moteur à piston radial (1).

2. Engrenage hydrostatique mécanique selon la revendication 1, **caractérisé en ce que** la troisième partie de carter (5) est connectée à un boîtier de soupape (19) par le biais duquel le moteur à piston radial (1) est alimenté en fluide sous pression.

3. Engrenage hydrostatique mécanique selon la revendication 1, **caractérisé en ce que** l'écoulement de fuite du moteur à piston radial (1) s'écoule dans l'espace (22) formé par la deuxième partie de carter (6) et la troisième partie de carter (5), depuis lequel cet écoulement de fuite s'écoule par le biais d'un radiateur (39) dans un réservoir de fluide sous pression (40).

4. Engrenage hydrostatique mécanique selon la revendication 2, **caractérisé en ce qu'**une soupape de rinçage (35) est disposée dans le boîtier de soupape (19), et permet de faire parvenir du fluide sous pression hors d'un retour de fluide sous pression depuis le moteur à piston radial dans l'espace (22) qui est formé par la deuxième moitié de carter (6) et par la troisième moitié de carter (5).

5. Engrenage hydrostatique mécanique selon la revendication 1, **caractérisé en ce que** l'espace (21) qui est formé par la première moitié de carter (15) et par la deuxième moitié de carter (6), est rendu étanche vis-à-vis des fluides sous pression par rapport à l'espace (22) qui est formé par la deuxième moitié de carter (6) et par la troisième moitié de carter (5).
